# EUROPEAN PATENT SPECIFICATION

(11) **EP 3 791 030 B1**
(45) Date of publication and mention of the grant of the patent: **15.05.2024**
(21) Application number: 19732415.5
(22) Date of filing: 12.06.2019
(51) Int. Cl.: E04B 1/10, E04B 1/76, E04B 2/70

(54) **TIMBER FRAME STRUCTURE AND METHOD OF ASSEMBLING THE SAME**
HOLZRAHMENSTRUKTUR UND VERFAHREN ZU DEREN ZUSAMMENBAU
ENSEMBLE DE CHARPENTE EN BOIS DE CONSTRUCTION ET PROCÉDÉ D'ASSEMBLAGE ASSOCIÉ

(30) Priority: 15.06.2018 GB 201809821
(43) Date of publication of application: 17.03.2021
(73) Proprietor: KLDN Holdings Ltd, Ackworth Wakefield, West Yorkshire WF7 7NQ (GB)
(72) Inventor: Kerrigan, Steven Bernard, Pontefract, Yorkshire WF7 7HT (GB)
(74) Representative: HGF
(86) International application number: PCT/GB2019/051626
(87) International publication number: WO 2019/239130

(56) References cited:
- EP-A1- 2 778 308
- EP-A1- 3 168 379
- FR-A1- 2 576 341
- FR-A1- 2 779 460
- US-A1- 2003 226 325

## Description

The present invention relates to a timber frame structure and to a method of assembling the same.

Although the following description refers almost exclusively to a timber frame structure in the form of a two storey house or building, it will be appreciated by persons skilled in the art that the present invention could relate to any type of building, construction, house and/or the like, and could comprise a single storey structure or a structure comprising any number of storeys as required.

The use of a timber frame to build a house is well known. The timber frame house is typically constructed on a concrete platform. A sole plate is installed on the concrete platform and a timber frame, typically comprising upright stud members and transverse joist members, together with structural board members, are joined to the sole plate. The most commonly used timber frame construction method is platform frame construction, whereby the floor deck of one floor becomes the erection platform of the next floor. Thus, separate upright stud members are typically used for each floor of the building. The transverse joist members sit against the upright stud members. Problems associated with conventional timber frame constructions are that the timber undergoes expansion and/or shrinkage over time and therefore gaps form between the timber stud members and rail members. These gaps create thermal breaks in the building and form cold spots. In addition, insulation provided between the walls and floors are separate and this also forms thermal breaks and cold spots, thereby making such constructions energy inefficient.

Document EP 3 168 379 A1 discloses a timber frame structure including a plurality of upright stud members, a plurality of transverse joist members, thermal insulating means and one or more cavities.

It is therefore an aim of the present invention to provide an improved timber frame structure which overcomes the abovementioned problems.

It is a further aim of the present invention to provide an improved method of assembling a timber frame structure which overcomes the abovementioned problems.

According to a first aspect of the present invention there is provided a timber frame structure according to claim 1.

The present invention has the advantage that the integral nature of the upright stud members and transverse joist members, and the manner in which the stud and joist members are engaged together in use, prevents or substantially prevents timber shrinkage. The arrangement of the stud and joist members and the insulating means ensures there is no, or substantially no, thermal break in the insulation of the structure. In addition, the one or more cavities allow air/fluid flow through or in the same. Heat within the air/fluid in the cavities can be extracted using a heat recovery and/or ventilation device. The combination of features create a structure which has an "A-rated" Building Energy Rating (BER) and has zero, or substantially zero, carbon emissions.

The definition of an integral upright stud member is a single upright or vertical frame member that extends over at least two floors in height within the structure (i.e. from a floor surface of a first level to a ceiling of at least a second level above the first level), or from a ground level to the roof level of the structure, as distinct to conventional upright stud members that conventionally only extend between a single floor and ceiling of the floor of the structure.

The definition of an integral transverse joist member is a single frame member that is horizontal or transverse to the upright stud member and that extends between two opposing walls or upright stud members of the structure, as distinct to conventional horizontal joist members that conventionally only extend across a room of the structure.

Preferably the transverse joist members are arranged perpendicular or substantially perpendicular to the upright stud members.

Preferably the timber frame structure is built upon foundation means.

Preferably the foundation means includes one or more thermal insulating block means, such as for example Thermolite Aircrete blocks ^{™} (by Forterra), Fibolite blocks ^{™} (by Plasmor), Celcon blocks (by Celcon), Durisol Concrete block and/or the like.

In one example, the foundation means includes concrete block means or hollow concrete block which is infilled with concrete and/or thermal insulation material, such as for example a rigid graphite polystyrene material. Preferably the one or more thermal insulating block means provide the exterior perimeter structure of the foundation means.

Preferably a hole is dug in the ground for the foundation means and the one or more thermal insulating block means are located in the hole.

In one embodiment the thermal insulating block means are built up in the hole to ground level or a pre-determined distance below ground level. For example, the thermal insulating block means could be provided in the hole up to a distance of 300-450mm below the internal ground/floor level of the timber frame structure and/or approximately 150mm or 250mm below the external ground level.

In one embodiment concrete is located in the hole prior to location of the foundation means or one or more thermal insulating block means, the concrete thereby forming a base layer or strip layer of the foundation means or on which the foundation means are located.

In one embodiment one or more exterior wall bricks are located on an uppermost surface of the thermal insulating block means to a required height. An example of an exterior wall brick that can be used is an engineering brick.

In one embodiment aggregate, stone and/or infill material is used to fill the area around the exterior of the foundation means.

In one embodiment one or more interior wall blocks are located on an uppermost surface of the foundation means or one or more thermal insulating block means to a required height. Examples of interior wall blocks are an engineering brick and/or a blockwork component.

Preferably both the interior and exterior wall bricks are located on an uppermost surface of the foundation means or thermal insulating block means and a cavity is defined between the interior and exterior wall bricks.

In one embodiment base frame means or a sole plate is located on or attached to at least part of the foundation means, to the interior wall blocks used on the foundation means and/or thermal insulating means forming at least part of the foundation means; and further preferably to an uppermost surface of the foundation means, the interior wall blocks and/or thermal insulating means.

Preferably any suitable attachment means can be used to attach the base frame means or sole plate to the foundation means, interior wall blocks and/or thermal insulating means for the foundation means. The attachment means preferably includes any or any combination of resin, adhesive, welding, one or more bolts, threaded bar, washer, nut and/or the like. In one example, a hole is drilled or formed through the interior wall blocks, the hole is filled with resin and a threaded bar or bolt and nut is located in the same.

In one embodiment the one or more integral transverse joist members are joined to the base frame means or sole plate, and preferably to an uppermost surface of the base frame means or sole plate. Further preferably the one or more integral transverse joist members are also joined to one or more of the upright stud members.

Preferably the one or more integral transverse joist members are joined to the base frame means or sole plate using fixing means.

Preferably the fixing means can include one or more nuts and bolts, fixing pins, inter-engaging members, screws, adhesive and/or the like.

Preferably one or more voids are formed in the foundation means between elements of the foundation means, between opposing interior wall blocks or thermal insulating means of the foundation means. The one or more voids can be ventilated to atmosphere (i.e. to the air surrounding the timber frame structure) via venting means provided in or associated with the void.

In one example, the venting means includes a telescopic vent, ground box and through wall duct to allow a vent to be provided from ground level to the one or more voids.

In one example, the venting means includes alternating venting means to allow external air to enter the foundation void.

Preferably one or more cavity trays are provided to ensure that external air does not enter the one or more fluid/air cavities (interior facing and/or exterior facing) defined in the walls of the structure, since these are typically unvented.

Preferably the one or more voids provided in or associated with the foundation means are lined with sand on at least a horizontal or ground surface of the same.

In one embodiment a membrane is located in the void to line the same in use and/or is provided between one or more layers of the foundation means

Preferably the membrane is located on the sand in the void of the foundation means.

In one example the membrane is located alone or in addition on an interior facing side and top of the interior wall blocks of the foundation means.

Preferably the membrane is a waterproof, damp or vapour resistant membrane.

Preferably the membrane is vapour resistant to a value greater than 530MNs/g.

In one example the membrane is VISQUEEN^{™} (supplied by British Polythene Limited).

The plurality of transverse joist members are arranged at spaced apart locations to form one or more floors of the timber frame structure, and further preferably the transverse joist members are arranged parallel or substantially parallel to each other.

Preferably the transverse joist members are arranged in a planar, horizontal, substantially planar or substantially horizontal arrangement in each floor or the structure.

The integral transverse joist members extend across the entire width of the timber frame structure between two or more opposing upright stud members.

Preferably the thermal insulation means or floor thermal insulation means are provided on an upper surface of (i.e. a surface furthest from the foundation means), on a top of and/or between the transverse joist members.

In one embodiment the thermal insulation means or floor thermal insulation means include rigid or substantially rigid thermal insulation boards or material. For example, expanded polystyrene (EPS) rigid insulation boards could be used, styrene fire retardant EPS board could be used and/or the like.

Preferably the thermal insulation means used in the structure are fire retardant or include fire retardant material.

In one embodiment the thermal insulation means or floor thermal insulation means include a stone or mineral wool insulation material, such as for example ROCKWOOL^{™} insulation, Rockwell Flexi^{™} insulation and/or the like.

In one embodiment the rigid or substantially rigid thermal insulation boards are provided in addition to the stone or mineral wool insulation material between the transverse joist members. For example, the stone or mineral wool insulation material could be located on top of the thermal insulation boards.

Preferably a thermal insulating, waterproof and/or vapour resistant barrier membrane is located on top of and/or on an external surface of the thermal insulation means located on, provided on or associated with and/or between the transverse joist members and/or upright stud members.

Preferably the thermal insulating, waterproof and/or vapour resistant barrier membrane is located over an upper or upwardly facing surface of the transverse joist members.

In one example, the thermal insulating, waterproof and/or vapour resistant barrier membrane is suitable for interior use, such as for example, TYVEK AIRGUARD^{™} reflective membrane (supplied by Du Pont).

Preferably one or more floor panels are located on top of the insulation means and/or barrier member associated with the transverse joist members.

In one example the one or more floor panels are formed from wood, chipboard, plywood and/or the like.

Preferably the upright stud members are arranged in a parallel or substantially parallel arrangement to each other.

Preferably the plurality of upright stud members are arranged equidistance apart from each other.

Preferably the plurality of transverse joist members are arranged equidistance apart from each other.

Each upright stud member has at least one recess defined therein for the location of at least part of one of the transverse joist members therein in use. This allows the upright stud member and the transverse joist member to be "keyed together". This prevents any cold spots from forming in the timber frame and prevents gaps forming due to shrinkage in the timber frame.

In one embodiment the engagement between the upright stud member and the transverse joist member is in the form of a mortise and tenon joint or type of arrangement.

In one embodiment the recess defined in the upright stud member is defined in a side of the stud member and is open to a front, rear and side surface of the upright stud member (i.e. one side surface and two adjacent perpendicular surfaces).

Preferably the thermal insulation means are provided on or associated with the upright stud members or between the upright stud members. Further preferably the thermal insulation means is a rigid or substantially rigid insulation material, board and/or member, such as for example, expanded polystyrene (EPS) rigid insulation board.

Preferably the thermal insulation means is fire retardant or includes fire retardant material.

In one embodiment the thermal insulation means or upright frame thermal insulation means include a stone or mineral wool insulation material, such as for example ROCKWOOL^{™} insulation, Rockwell Flexi^{™} insulation and/or the like.

Preferably a first panel member or plurality of first panel members are attached to an exterior or exterior facing surface of the upright stud members, on a barrier member located on the external surface of the upright stud members and/or on a thermal insulating means located on or associated with an external surface of the upright stud means.

Yet further preferably the first panel member(s) are typically provided between adjacent upright stud members on an exterior surface of the same.

Preferably the first panel member is a rigid or substantially rigid member. In one example the first panel member is made from wood, chipboard, plywood and/or the like.

Preferably an airtight and/or vapour resistant barrier membrane is applied to an exterior or exterior facing surface of the upright stud member panel member or first panel member. In one example, the barrier membrane is TYVEK AIRGUARD^{™} (supplied by Du Pont).

Preferably a further panel member or plurality of further panel members are provided on or associated with the exterior or exterior facing surface of the first panel member and is arranged so as to form a (exterior facing) gap, cavity or channel between the first panel member and the further panel member.

Preferably the further panel member is a rigid or substantially rigid member.

In one example, a baton or support member is provided on or associated with the exterior surface of the upright stud member or first panel member and is arranged in a transverse manner between adjacent upright frame members or panel members to allow the further panel member to be attached to the same in use.

Preferably the further panel member is formed from wood, chipboard, plywood and/or the like.

In one embodiment a barrier member is attached to an exterior or exterior facing surface of the further panel member that is permeable to water vapour, thereby providing a "breathable membrane". Preferably the barrier member is formed from a high density polyethylene based material, such as for example TYVEK HOUSEWRAP^{™} (supplied by Du Pont).

Preferably thermal insulation means are attached to the exterior or exterior facing surface of the exterior facing "breathable" barrier member. Preferably the thermal insulation means includes a rigid or substantially rigid board material. For example, the insulation means could include an expanded polystyrene rigid insulation board.

In one embodiment the exterior or exterior facing thermal insulation means or exterior "breathable" barrier member can be rendered, directly or indirectly, using any suitable exterior render, such as for example Alumasc 2-coat render^{™}.

Preferably a panel member or members, or a second panel member or a plurality of second panel members are attached to an interior surface or interior facing surface (directly or indirectly) of the upright stud members in use, and typically is provided between adjacent upright stud members on an interior surface of the same.

Preferably the interior panel member(s) or second panel member(s) are a rigid or substantially rigid member.

In one example the second panel member is made from wood, chipboard, plywood and/or the like.

Preferably a thermal reflective barrier membrane is applied to an interior facing surface of the interior panel member(s) and/or second panel member(s). In one example, the thermal reflective barrier membrane is formed from polypropylene, polyethylene and/or an aluminium material, such as for example, TYVEK AIRGUARD REFLECTIVE^{™} (supplied by Du Pont). This helps to reduce heat loss from the interior of the timber frame structure and to reduce the risk of condensation forming on the interior surface of the structure.

Preferably a yet further panel member is provided on or associated with the interior or interior facing surface of the interior panel member(s) and/or second panel member(s) and is arranged so as to form a (interior facing) void, cavity or channel between the interior panel member(s) and/or the second panel member and the yet further panel member.

In one embodiment two or more cavities are defined in the external walls of the structure; an exterior facing cavity (i.e. a cavity closest to the exterior side of the external wall) and an interior facing cavity (i.e. a cavity closest to the interior side of the external wall).

Preferably one or more services are provided in the interior facing cavity, although they could be provided in the exterior facing cavity as well as, or instead of, if required. For example, gas and electrical services could be provided in the cavity.

Preferably the air and/or fluid flow for heating and cooling the structure when assembled is provided in the exterior facing cavity, although it could also be provided in the interior facing cavity as well as, or instead of, if required.

Preferably the exterior facing cavity is larger in dimensions or cross sectional area compared to the interior facing cavity.

In one example, a baton or support member is provided on or associated directly or indirectly with the interior surface of the interior panel member(s) and/or second panel member(s) and is arranged in a transverse manner between adjacent upright stud members to allow the yet further panel member to be attached to the same in use.

Preferably the yet further panel member is formed from plasterboard, such as for example gypsum fireline plasterboard, an acoustic insulating or attenuating plasterboard, Soundbloc^{™} plasterboard (provided by British Gypsum Ltd) and/or the like. The plasterboard can be skimmed if required.

The thermal insulating means provided on or associated with the upright stud members is continuous or substantially continuous with the insulating means provided on or associated with the transverse joist members. For example, there are no or substantially no breaks or gaps in the insulation between the upright stud members and the transverse joist members.

Further preferably the thermal insulation means of the upright and transverse joist members are in direct abutment with each other, are integral or are intermixed with each other.

Preferably the thermal insulation means used anywhere in the structure can also has acoustic insulating properties to help reduce noise transference across the same in use.

Although the timber frame structure can be constructed on site (i.e. on the site where the timber frame structure is to be assembled), in one embodiment a plurality of the upright stud members can be provided together with one or more horizontal or transverse joist member to form a pre-fabricated frame section. These pre-fabricated frame sections can be assembled in a factory or remote location and can then be transported on site to be fitted together with one or more other pre-fabricated frame sections, upright stud members and/or the transverse joist members.

Preferably any type of timber can be used for the timber frame structure. In one example, the timber is glulam timber. In one embodiment the timber used is a soft wood, such as for example a grade C24 timber.

Preferably the one or more cavities (interior and/or exterior facing) defined in the external walls of the timber frame structure are arranged to have air or fluid flowable within the same. The arrangement of the walls in the timber frame structure allow the air or fluid within the cavities to be warmed/heated in normal use of the timber frame structure when assembled. The warmth/heat from this air contained in the cavity can be extracted using heat recovery means.

Preferably the one or more cavities (interior and/or exterior facing) defined in the external walls of the timber frame structure are unvented to the exterior of the timber frame structure (i.e. the external wall cavities do not take air/fluid from the exterior of the timber frame structure directly via specific vents or vent means provided on or associated with the doors, windows, timber frame structure). (For example, they form a closed fluid/air system).

In one embodiment the one or more cavities (interior and/or exterior facing) defined in the external walls of the timber frame structure are not specifically vented to the interior of the timber frame structure. As such, the air/fluid within the cavities is contained within the cavities, other than being extracted/moved via specific ventilation and/or heat recovery means and/or being allowed to flow into/out of a roof space of the timber frame structure. (For example, they form a closed fluid/air system).

In one example the exterior and/or interior facing cavities, channels or gaps can be used for the location of services to the structure, such as for example, to house one or more gas pipes, electricity cables/wiring and/or the like.

In one embodiment the one or more cavities (interior and/or exterior facing) defined in the external walls of the timber frame structure open into the roof space defined in the timber frame structure and/or into conduit means associated with a ventilation and/or heat recovery means.

Preferably the ventilation and/or heat recovery means is located in the roof space of the timber frame structure.

Preferably ventilation means are provided in the structure to allow air and/or fluid taken from the one or more cavities defined in one or more external walls of the structure (i.e. exterior facing cavity), at least in part, to flow to different parts of the structure in use. For example, air taken from the cavities can be moved to different rooms within the structure.

In one example, the ventilation means allows air flow from the exterior of the timber frame structure to the interior of the timber frame structure. Thus, for example, in the summer months when heat extraction from the air within the timber frame structure is not required, the ventilation means can allow fresh cooler air to enter the timber frame structure.

The ventilation means can include one or more fans, extractor fans, pumps, heat exchangers, inlet means, apertures and/or the like.

Preferably a heat recovery means are provided in the structure to allow air and/or fluid taken from the one or more cavities defined in one or more external walls of the structure (i.e. exterior facing cavity), at least in part, to flow to different parts of the structure in use. For example, air taken from the cavities can be moved to different rooms within the structure.

Preferably the heat recovery means are arranged to extract heat from the air/fluid in the one or more cavities and/or the air/fluid taken from one or more other locations in the timber frame structure and to control the temperature of air/fluid being allowed to flow back or flowing back into the structure in use. This can be used to maintain a desired temperature within the timber frame structure.

Preferably the ventilation and/or heat recovery systems include conduit means through which the fluid and/or air flows in use.

Preferably the conduit means are provided in or associated with one or more walls of the timber frame structure, such as for example one or more internal walls of the structure.

In one embodiment the conduit means can include one or more pipes, conduits, ducting, channel members and/or the like.

Preferably the heat recovery and/or ventilation means or system includes one or more fluid inlets or inlet means to allow fluid or air to enter the structure or system.

Preferably the heat recovery system and/or ventilation system includes one or more fluid outlets or outlet means to allow fluid or air to exit the structure or system.

In one embodiment the fluid or air inlet means and/or the fluid or air outlet means includes one or more valve members, apertures, vents and/or the like.

In one embodiment fluid or air circulation means or devices are provided in the heat recovery and/or ventilation means, such as for example an extractor fan, a pump and/or the like.

In one embodiment heat exchanging means are provided in or associated with the heat recovery system or means.

Preferably the cavity defined on the interior side or interior facing side of the upright stud members is for the provision of services to the structure, such as one or more water pipes, electrical cables, gas pipes and/or the like.

Preferably the structure is formed so as to define one or more roof cavities.

Preferably the one or more cavities (interior and/or exterior facing) defined in the one or more externals walls of the structure are in fluid communication with the one or more roof cavities, thereby allowing air and/or fluid to flow between the wall cavities and the roof cavity in use.

In one example, air or fluid flowing through the wall cavities enters the roof cavity and is directed back into one or more wall cavities of the house at a required temperature for release into one or more rooms or areas within the timber frame structure.

Preferably the roof cavity is defined between a roof of the structure and a ceiling of the uppermost floor of the structure.

In one embodiment one or more window or door apertures are defined between the upright stud members for the location of one or more window or doors in use.

In a preferred embodiment the floor, one or more walls and/or roof of the structure are pre-formed as cassettes that are then transported to the construction site for assembly and for providing the completed frame structure. The cassettes are typically attached together via attachment means, such as for example, bolts, screws, fastening means and/or the like.

Preferably the one or more walls and /or roof cassettes are closed cell timber frame cassettes.

Preferably the external wall and/or roof cassettes are fitted with doors and/or windows, at least partial external wall cladding, at least partial external roof cladding prior to being installed and finished on site of the timber construction.

Preferably internal walls linings, finishings, services, fixtures and/or fitting are installed in the structure on site.

In one embodiment the structure is a maximum of three stories high or three floors high.

Preferably one or more preservative agents are used on the timber frame structure to prevent disease, be resistant to insects or other potentially damaging living organism and/or to enhance of the life of the structure. According to a second aspect of the present invention there is provided a method of assembling a timber frame structure according to claim 15.

The SAP (Standard Assessment Procedure) calculation for the predicted energy assessment of a finished construction using the timber frame structure is 104A, based on the thermal calculations of the materials (in their unassembled form) used to provide the structure and finished construction. The Environmental rating is 103A. The estimated CO₂ Emissions is -0.63 t/year. The Dwelling Emissions Rate (DER) is -1.77 and the Target Emissions Rate (TER) is 24.96.

Detailed embodiments of the present invention will now be described with reference to the following figures, wherein:
Figure 1 is a cross sectional view taken through part of the foundation means and lower walls of a timber frame structure according to an embodiment of the present invention;
Figures 2a and 2b show an end view and a perspective view of a frame section according to an embodiment of the present invention respectively;
Figures 3a-3c show a perspective view, an end view and a front view of a further assembled and partially constructed timber frame structure compared to figures 2a and 2b according to an embodiment of the present invention respectively;
Figures 4a-4c show a perspective view, a front view and an end view of a further assembled and partially constructed timber frame structure compared to figures 3a-3c according to an embodiment of the present invention respectively;
Figures 5a-5c show a perspective view, a front view and an end view of a further assembled and partially constructed timber frame structure compared to figures 4a-4c according to an embodiment of the present invention respectively;

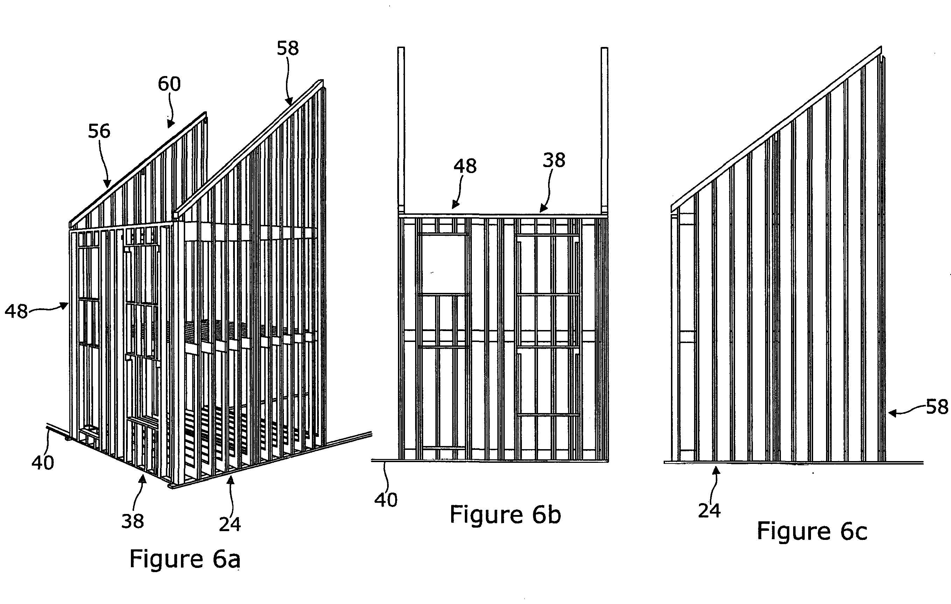

Figures 6a-6c show a perspective view, a front view and an end view of a further assembled and partially constructed timber frame structure compared to figures 5a-5c according to an embodiment of the present invention respectively;
Figures 7a-7b show perspective views from opposite ends of the further assembled and partially constructed timber frame structure compared to figures 6a-6c according to an embodiment of the present invention respectively;
Figures 8a-8b show perspective views from opposite ends of the further assembled and partially constructed timber frame structure compared to figures 7a-7b according to an embodiment of the present invention respectively;
Figure 9 is an enlarged cross sectional view showing the detail of the roof and upper walls of the timber frame structure according to one embodiment of the present invention;
Figure 10 shows part of a heat recovery and ventilation system that can be used in the timber frame structure according to an embodiment of the present invention;
Figure 11 shows a cross sectional view taken through part of the foundation means, walls and roof of a timber frame structure according to a further embodiment of the present invention;
Figures 12a-12c show a cross sectional view taken through an external wall of the timber frame structure when fully assembled in one embodiment of the present invention; a cross sectional view taken along line A-A of figure 12a; and a cross sectional view taken along line B-B of figure 12a respectively;
Figures 13a and 13b show a cross sectional view taken though a roof panel of the timber frame structure when fully assembled in one embodiment of the present invention; and a cross sectional view taken along line B-B of figure 13a respectively; and
Figures 14a and 14b show a cross sectional view taken through an upper floor panel of the timber frame structure when fully assembled in one embodiment of the present invention; and a cross sectional view taken along line B-B in figure 14a respectively.

The detailed description of a timber frame structure below has the key features of the present invention, as defined in claim 1.

It is to be appreciated that the measurements referred to in the following examples are not limiting and may be changed according to the design of the timber frame being located on the same, the ground conditions and/or the like.

It will be appreciated that the following steps are not necessarily carried out in the order stated and that steps can be undertaken in a different order to provide the same finished timber frame structured.

### Construction of the Foundation for the timber frame structure

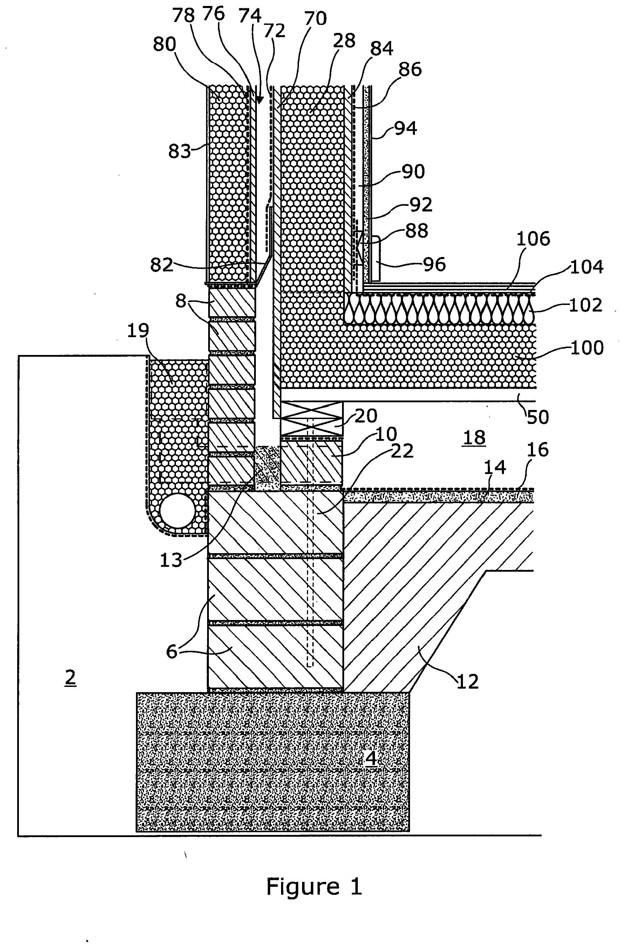

1. Firstly, with reference to figure 1, a hole is dug in the ground 2 to a depth, such as for example 1 metre, suitable for the location of foundations for supporting a timber frame structure according to an embodiment of the present invention in use.
2. Concrete 4 is located in the foundation hole at suitable locations adjacent the perimeter of the hole to a required depth, such as for example 450-600mm in height.
3. Thermal insulating blocks 6 are then located on the concrete around the perimeter of the foundation hole and are built up to a distance of between 300-450mm below the internal floor level of the timber frame structure or approximately 150mm below the finished external ground level. In one example the thermal insulating blocks 6 are 300mm wide. An example of a type of thermal insulating block that could be used is a Thermolite Aircrete block ^{™} (by Forterra).
4. External brickwork is then built on top of the thermal insulating blocks 6 adjacent an exterior edge thereof using external bricks 8 to a suitable height, such as for example 300mm in height.
5. Internal blocks 10 are also built on top of the thermal insulating blocks 6 adjacent an interior edge thereof to a suitable height, such as for example less than 200mm in height. A cavity 13 is defined between the external bricks 8 and the internal blocks 10. At the base of this cavity 13 concrete can be provided with a chamfered top face to allow water flow off the same that may build up in the cavity 13 in use.
6. Hardcore 12 or other suitable foundation filling material is located in the area between the thermal insulating blocks 6, such as for example to a depth of at least 150mm.
7. A layer of sand 14 is placed on top of the hardcore 12, such as for example to a depth of 25mm.
8. A waterproof or vapour resistant membrane 16 is located over the sand layer 14, on the internally facing sides of the internal blocks 10 and on top of the internal blocks 10. An example of a vapour resistant membrane that can be used is VISQUEEN^{™} (provided by British Polythene Limited).
9. The void 18 above the membrane 16 and below the timber frame structure that is to be located on the foundations in use is in the form of a ventilated solumn. The void 18 can be vented to atmosphere (i.e. to the air surrounding the timber frame structure) via venting means, such as for example a telescopic vent and ground box 19 that is located on an exterior side adjacent the external bricks 8 and passes through a "through wall" duct defined through internal blocks 10. This allows air flow into and out of the foundations of the structure.

### Construction of the Timber Frame Structure

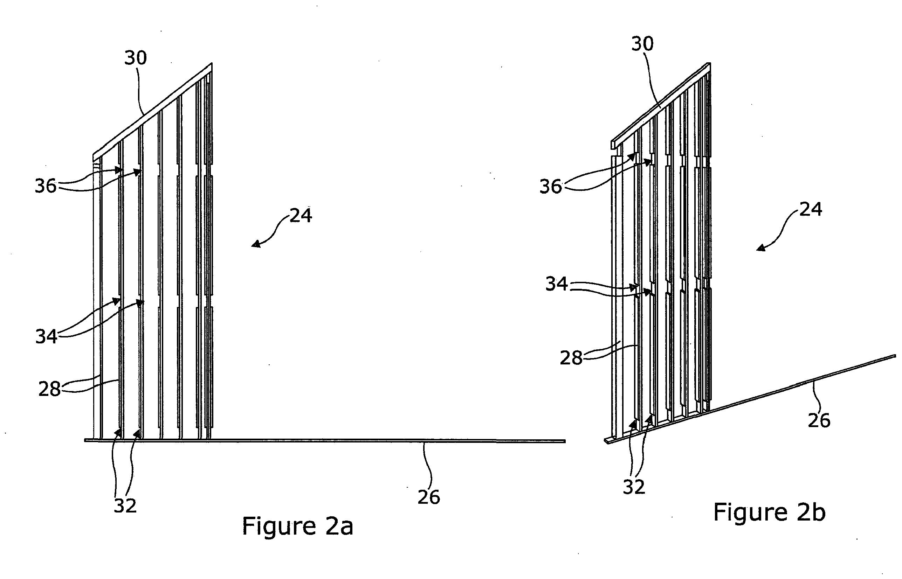

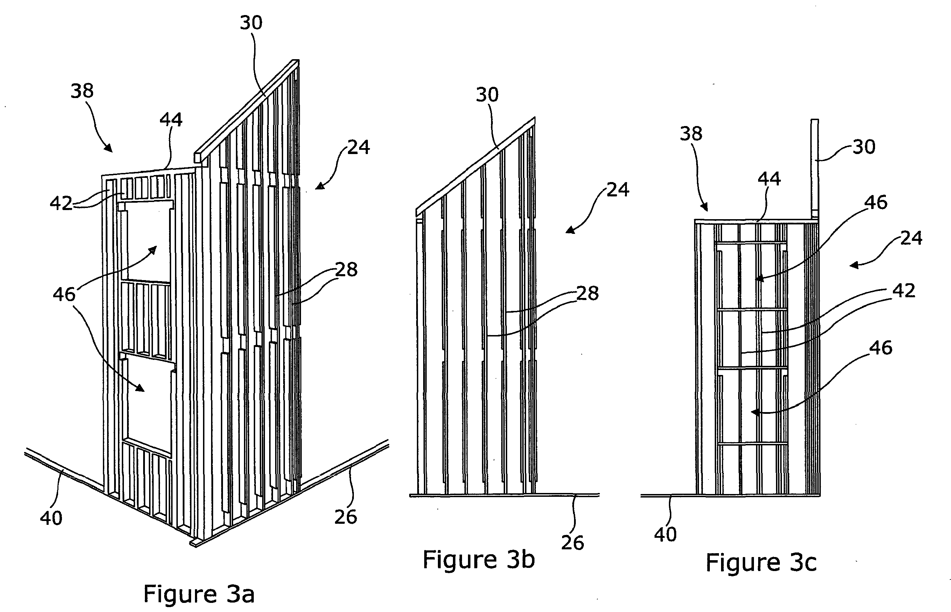

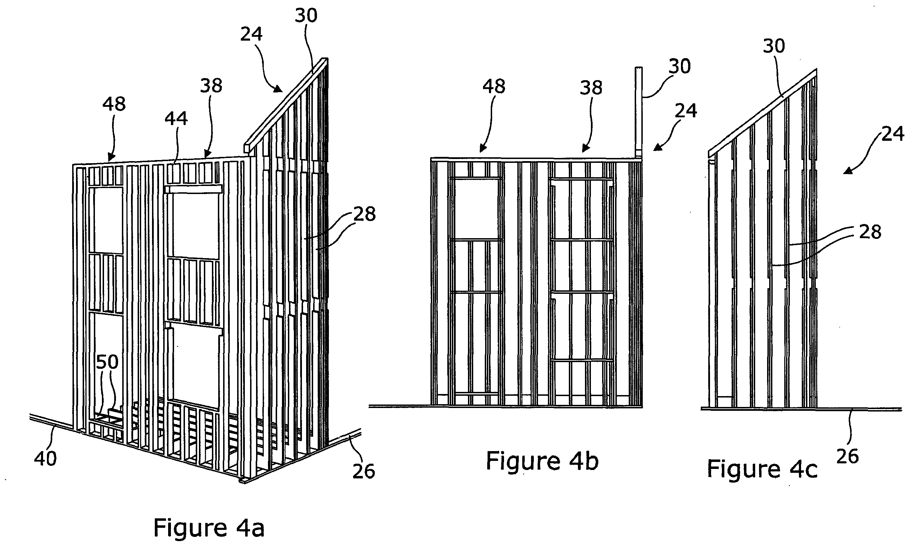

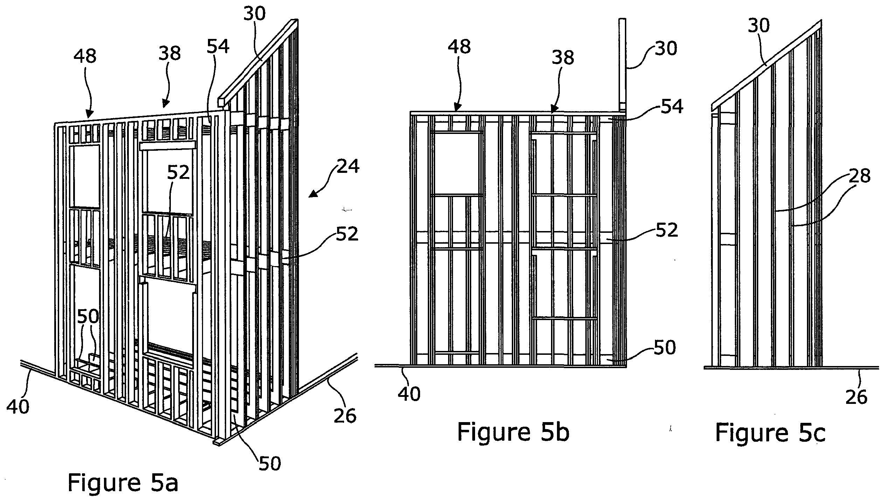

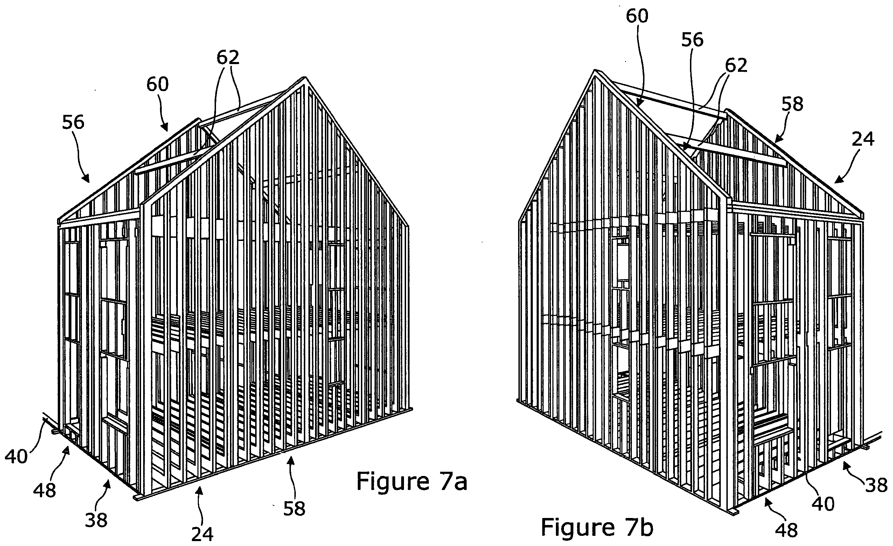

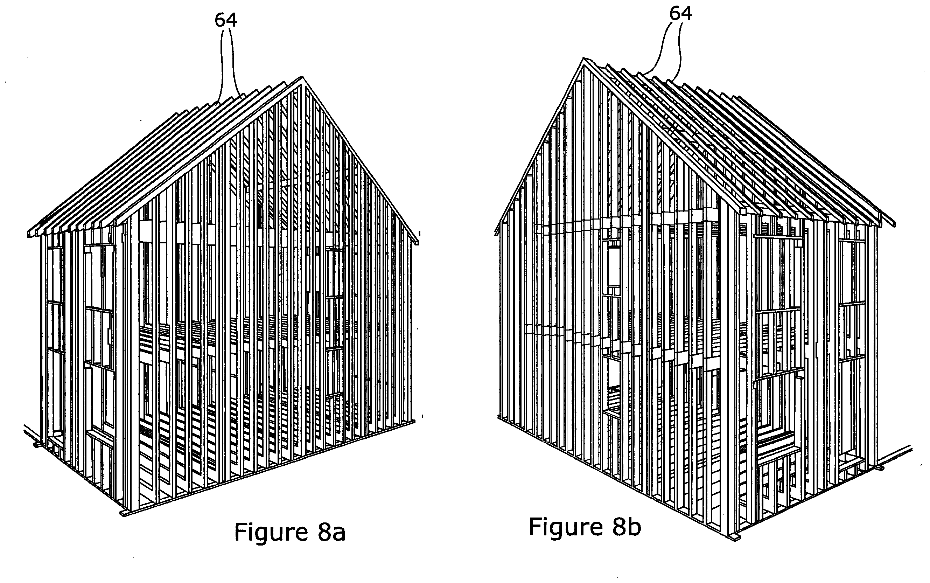

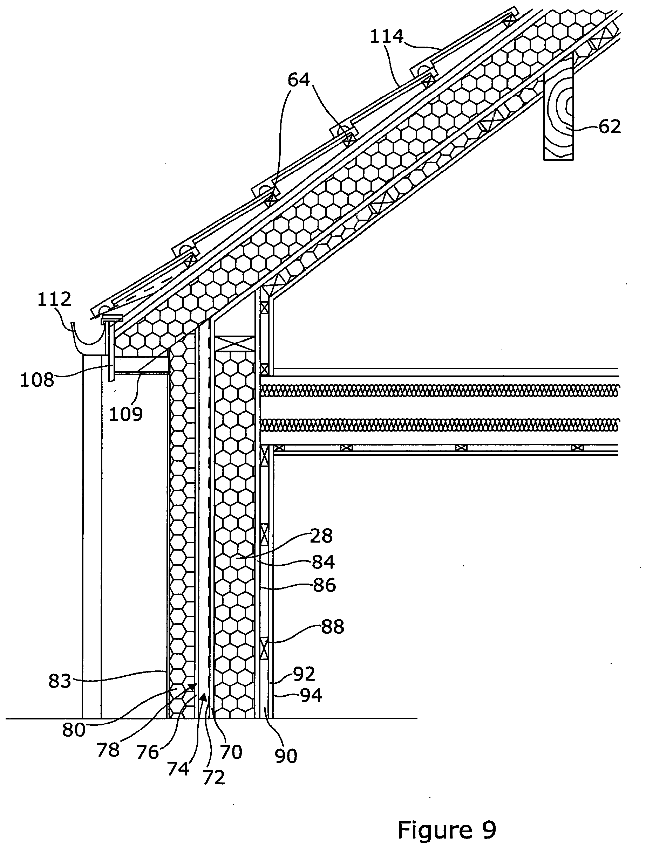

1. A timber sole plate 20 is fixed to an upper surface of the internal blocks 10 using fixing means in the form of a fixing pin 22. The fixing pin 22 can pass through the internal blocks 10 and the thermal insulating blocks 6. The sole plate 20 defines the outer perimeter frame of the timber structure that is to be built on the same. For example, a 10mm diameter hole can be drilled through the sole plate 20, internal blocks 10 and thermal insulating blocks 6 to a depth of approx. 600mm. The hole is filled with epoxy resin and the fixing pin is located in the same with a washer and bolt on top.
2. Pre-assembled upright frame sections are then fixed to the sole plate to form the timber frame structure. The pre-assembled upright frame sections are typically constructed off-site (remote from the construction site) and transported to the construction site for assembly with other pre-assembled frame sections and frame members.
3. The first upright frame section 24 includes a horizontal base frame member 26, a plurality of integral upright frame members or studs 28 protruding outwardly from the same and a sloped roof frame member 30 located on the top of the upright frame members, as shown in figures 2a and b. The upright frame members are of such height to extend from the ground or lowest floor level of the structure to the roof level of the structure. The upright frame members are located a spaced distance apart and are parallel to each other. The height of the upright frame members 28 increase from the end of base frame member 26 towards the centre of the base frame member 26. It is to be noted that the base of some of the upright frame members 28 adjacent the base frame member 26 has a recess section 32 defined adjacent a side edge thereof. The recess sections 32 are for engagement with transverse frame members or joists that are to form the ground floor of the timber frame structure in use. Recess sections 34 are also defined at a first floor height of the upright frame members 28 for engagement with transverse frame members that are to form the first floor of the timber frame structure in use. Recess sections 36 are defined at a first floor ceiling height of the upright frame members 28 for engagement with transverse frame members that are to form the ceiling of the first floor of the timber frame structure in use.
4. A second frame section 38 is then joined in a manner perpendicular to the first frame section 24 to form a corner of the timber frame structure, as shown in figures 3a-3c. The second frame section 38 is pre-assembled, as per first frame section 24, and includes a base horizontal frame member 40, a plurality of upright frame members 42 arranged a spaced distance apart and parallel to each other, and a roof frame member 44. Roof frame member 44 is parallel to base frame member 40. A plurality of apertures 46 are defined between the upright frame members 42, which will form the windows of the timber frame structure when finished.
5. A third pre-assembled frame section 48 is joined in an adjacent and planar manner to second frame section 38, as shown in figures 4a-4c.
6. Transverse frame members 50 are then fitted between the frame sections 24, 38, 48 to form the floor joists of the ground floor of the timber frame structure, as shown in figures 4a-4c. A part of each transverse frame member 50 is shaped so as to engage in the recess sections 32 of the upright frame members 28 so as to form "keyed in" engagement between the upright frame members and the transverse frame members 50. The transverse frame members 50 are arranged a spaced distance apart from each other and parallel with base frame member 40.
7. Transverse frame members 52 are fitted between the frame sections 24, 38, 48 to form the floor joists of the first floor of the timber frame structure, as shown in figures 5a-5c. A part of each transverse frame member 52 is shaped so as to engage in the recess section 34 of the upright frame members 28 so as to form "keyed in" engagement between the upright frame members and the transverse frame members 52. The transverse frame members 52 are arranged to be a spaced distance apart from each other and parallel with base frame member 40 and transverse frame members 50.
8. Transverse frame members 54 are fitted between the frame sections 24, 38, 48 to form the ceiling joists of the first floor of the timber frame structure, as shown in figures 5a-5c. A part of each transverse frame member 54 is shaped so as to engage in the recess section 36 of the upright frame members 28 so as to form "keyed in" engagement between the upright frame members and the transverse frame members 54. The transverse frame members 54 are arranged to be a spaced distance apart from each other and parallel with base frame member 40 and transverse frame members 50, 52.
9. Further pre-assembled frame section 56 is fitted perpendicular to frame section 48 and opposite to frame section 24.
10. Pre-assembled frame section 58 is fitted adjacent to and in a planar arrangement to frame section 24 to further extend the end wall of the timber frame structure.
11. Pre-assembled frame section 60 is fitted adjacent to and in a planar arrangement to frame section 56 and opposite to frame section 58.
12. Further pre-assembled frame sections are joined together to form the upright walls of the timber frame section as required.
13. A plurality of spaced apart transverse frame members or purlins 62 are joined between the frame sections adjacent the top to form part of the roof structure, as shown in figures 7a and 7b. The transverse frame members 62 are a spaced distance apart from each other and parallel to base frame member 40.
14. A plurality of roof batons 64 are then joined to purlins 62 in a manner perpendicular to the same to form part of the roof of the timber frame structure, as shown in figures 8a-8b and 9.
15. Extension of the timber frame structure can take place in a similar manner to that described above to form any required shape, size and/or design of timber frame structure as required.
16. Once the timber frame structure is in place, the insulation, panel members, membranes, wiring, ducting and/or the like can be fitted.
17. Facias 108 and soffits 110 can be fitted on site or can be provided on the pre-assembled frame sections as required, as shown in figure 9.

Guttering 112 can be fitted to the roof.
18. Roof tiles 114 can be fitted to the roof, together with suitable insulation on the interior facing surface of the roof.

### Construction of the upright walls of the timber frame structure

1. Referring to figure 1, each upright frame member 28 (and other upright frame members forming the timber frame structure) is covered in insulation, such as for example expanded polystyrene rigid insulation board (i.e. Supertherm EPS70^{™} supplied by Eccleston & Hart).
2. On the exterior facing surface of the upright frame member 28, panel members 70 are joined between the members 28. In one example, the panel members 70 are formed from exterior grade plywood and are approximately 18mm in thickness.
3. A barrier membrane 72 is then attached to the exterior facing surface of the panel members 70. The barrier membrane 72 is typically of a type to reduce air leakage therethrough, minimise convection heat loss from the timber frame structure and control vapour therethrough. An example of a suitable barrier membrane is Tyvek Airguard^{™} Control Air leakage barrier (supplied by Du Pont).
4. Baton members are then fitted to the barrier membrane 72 so as to allow an exterior facing cavity 74 to be formed. Further exterior facing panel members 76 are then fitted to the baton members to form a wall of the cavity 74. In one example, the panel members 76 are formed from exterior grade plywood and are approximately 12mm thick. The cavity 74 is unventilated (in that there is no specific ventilation provision to the exterior of the timber frame structure) and in one example can be approximately 38mm in width. Cavity 74 is typically for the provision of a heating and ventilation system, as will be described in more detail below.
5. A barrier membrane 78 is then fitted to the exterior facing surface of the panel members 76. The barrier membrane 78 is typically permeable to water vapour, thereby providing a "breathable membrane". In one example the barrier member 78 is formed from a high density polyethylene based material, such as for example TYVEK HOUSEWRAP^{™} (supplied by Du Pont).
6. Insulation 80 is then fitted to an exterior facing surface of barrier membrane 78. The insulation 80 is typically rigid insulation panels formed from expanded polystyrene, such as for example Supertherm EPS70^{™} (supplied by Eccleston & Hart), and is 90mm in thickness.
7. A render 83 is then applied to the exterior facing surface of insulation 80 to provide a finish to the timber frame structure. An example of a render than can be used is 5mm Alumasc 2-coat render ^{™}.
8. A cavity tray 82 can be located at a base of cavity 74 to capture any water that be present in the cavity and allow the water to pass through weepholes in the brick work out of the timber frame structure.
9. On an interior facing surface of the upright frame member 28, panel members 84 are joined between the members 28. In one example, the panel members 84 are formed from exterior grade plywood and are approximately 18mm in thickness.
10. A thermal reflective barrier membrane 86 is then attached to the interior facing surface of the panel members 84. In one example, the barrier membrane is formed from polypropylene, polyethylene and/or an aluminium material, such as for example, TYVEK AIRGUARD REFLECTIVE^{™} (supplied by Du Pont). This helps to reduce heat loss from the interior of the timber frame structure and reduces the risk of condensation.
11. Baton members 88 are then fitted to the barrier membrane 86 so as to allow an interior facing cavity 90 to be formed. Further interior facing panel members 92 are then fitted to the baton members 88 to form a wall of the cavity 90. In one example, the panel members 92 are formed from plasterboard, such as for example British gypsum Fireline^{™} plasterboard and are approximately 12.5mm thick. A plaster skim 94 can be provided on an interior facing surface of the plaster board. The cavity 90 is unventilated (in that no specific ventilation means are provided) and in one example can be approximately 25mm in width. Cavity 90 is typically for the location of services associated with the timber frame structure, such as for example, wiring, electrical cables, water pipes and/or the like. A skirting board 96 can be added to an interior facing surface at the base of the panel members 92.

### Construction of the floors of the timber frame structure

1. Referring to figure 1, each transverse frame member 50, 52, 54 (and other transverse frame members forming the timber frame structure) is covered in insulation, such as for example expanded polystyrene rigid insulation board (i.e. Supertherm EPS70^{™} supplied by Eccleston & Hart).
2. Insulation 100 is also provided on top of the transverse frame members 50, 52, 54. The insulation can be the same as for step 1 above.
3. Further insulation 102 is then provided on top of insulation 100, such as for example a mineral wool insulation (i.e. Rockwool^{™} insulation).
4. A thermal reflective barrier membrane 104 is then attached to the interior facing surface of the insulation 102. In one example, the barrier membrane is formed from polypropylene, polyethylene and/or an aluminium material, such as for example, TYVEK AIRGUARD REFLECTIVE^{™} (supplied by Du Pont). This helps to reduce heat loss from the interior of the timber frame structure and reduces the risk of condensation.
5. Panel members 106 are then located on the interior facing surface of barrier membrane 104. The panel members 106 in one example can be chipboard flooring and can be approximately 22mm in thickness. Any other suitable floor material can be located on top of the chipboard flooring as required.

### Ventilation and/or Heat Recovery System

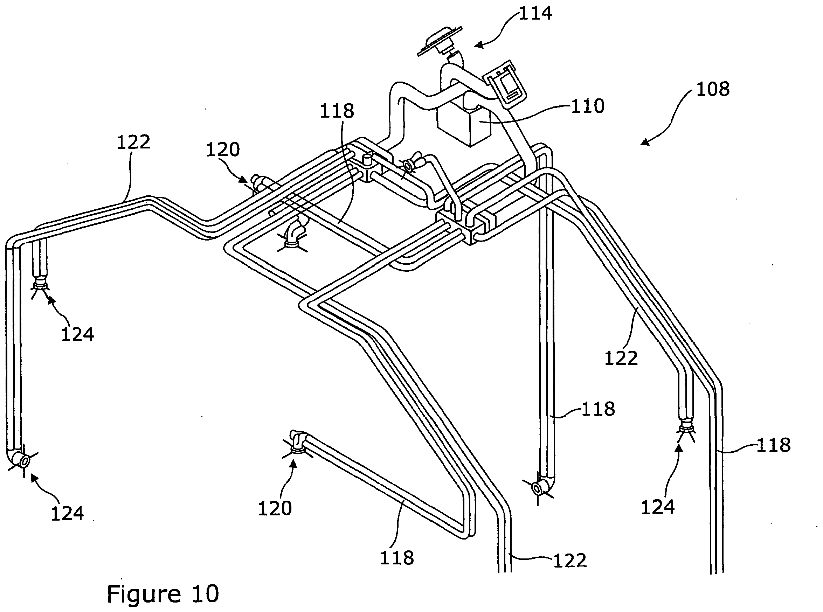

A ventilation and/or heat recovery system 108 can be provided in the timber frame structure in accordance with the present invention, as shown in figure 10. The exterior facing cavities 74 are used to allow air to flow around the external walls of the structure. Due to the construction of the external walls, air contained within the cavity is warmed in normal use of the structure. The heat or warmth from this air can then be extracted using heat recovery means for use in heating or maintaining the temperature of air flowing within a heat recovery and/or ventilation system in the structure.

The exterior facing cavities 74 are unvented directly to the exterior of the timber frame structure so as to prevent warm air from escaping to atmosphere but have one or more openings into the roof space of the structure to allow air to be directed into the roof space. As such, air that is warmed within the exterior facing cavities in normal use of the structure flows into the roof space and is arranged to enter a ventilation and heat recovery device 110 located in the roof space.

The ventilation and/or heat recovery system 108 includes warm air ducting 118 and cold air ducting 122 in communication with the ventilation and heat recovery device 110. The ducting 118 and 122 is arranged in the external walls of the structure to communicate with different areas or rooms within the structure.

The device 110 is arranged to circulate air through the timber frame structure via the ducting 118, 122. Device 110 includes heat exchanger means to recover heat passing into the device 110 and to transfer it to cooler air leaving the device to allow the air within the structure to be maintained at a required temperature, such as for example 18 degrees Celsius. For example, warm air taken from the kitchen or bathroom areas of the structure can be transported to device 110 to allow heat to be transferred from the same to cooler air which is then passed to other areas/rooms of the structure.

In warmer weather, cooler air can be brought into the structure via cold air inlet 114 so as to prevent the temperature within the structure from becoming too warm.

Warm air inlet/outlet valves 120 are associated with the warm air ducting 118 and cold air inlet/outlet valves 124 are associated with the cold air ducting 122. The inlet/outlet valves 120, 124 allow air flow from the heating and/or ventilation system to enter and exit the areas/rooms of the structure in use.

Condensation drain means can be associated with the heating and/or ventilation system to allow any condensation forming in the system to be drained away.

The ducting 118, 122 is typically insulated ducting. Most of the ducting is rigid but flexible ducting can be provided, particularly adjacent the inlet or outlet valves and the device 110.

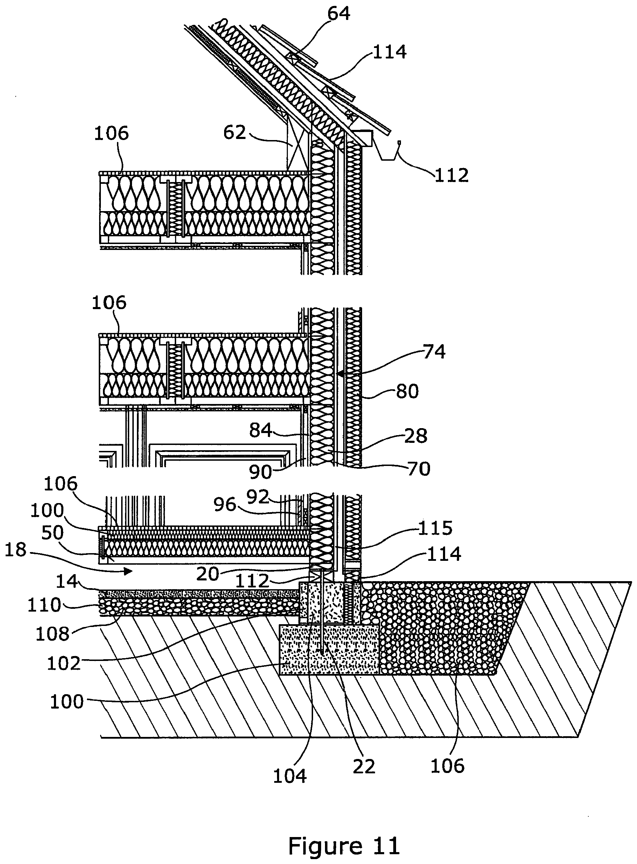

Referring to figure 11, there is show a cross sectional view taken through a timber structure according to a further embodiment of the present invention. The same reference numerals are used to describe the same features as in the earlier figures.

In Figure 11, two main changes have been made to the construction of the timber structure compared to the earlier described embodiments:
a) The way the foundations of the construction are prepared on which the timber structure is located; and
b) The way the roof is constructed.

More particularly, a concrete strip foundation 100 is laid and, rather than locating thermal insulating blocks 6 on the concrete foundation, a foundation block 102 (such as for example a Durisol^{™} insulating concrete foundation block) is used for location on foundation strip 100 with a concrete or thermal material infill 104.

Rather than using external brickwork 8, the foundation block 102 and foundation strip 100 can be backfilled using loose stones 106 on the external side of the construction.

Fine aggregate 108 (fine relative to the external aggregate 106) is provided in a layer adjacent the internal side of the foundation block 102, with a sand binding layer 14 located on top of the aggregate 108. A damp proof membrane 110 is located between the aggregate layer 108 and the sand layer 14.

A timber sole plate 20 is attached on top of a foundation sole plate 112, which in turn is attached to the concrete infill 104. A fixing pin 22 joins the sole plates 20, 112, infill 104 and foundation strip 100 together. Alternating and/or telescopic wall vents 114 are provided to allow air to enter the foundation void 18 and/or below the lowest suspended floor from the exterior side of the construction. However a cable tray 115 is provided to prevent external air from entering the wall cavity 74, such that cavity 74 is unvented directly to atmosphere and forms part of a closed fluid flow system within the structure.

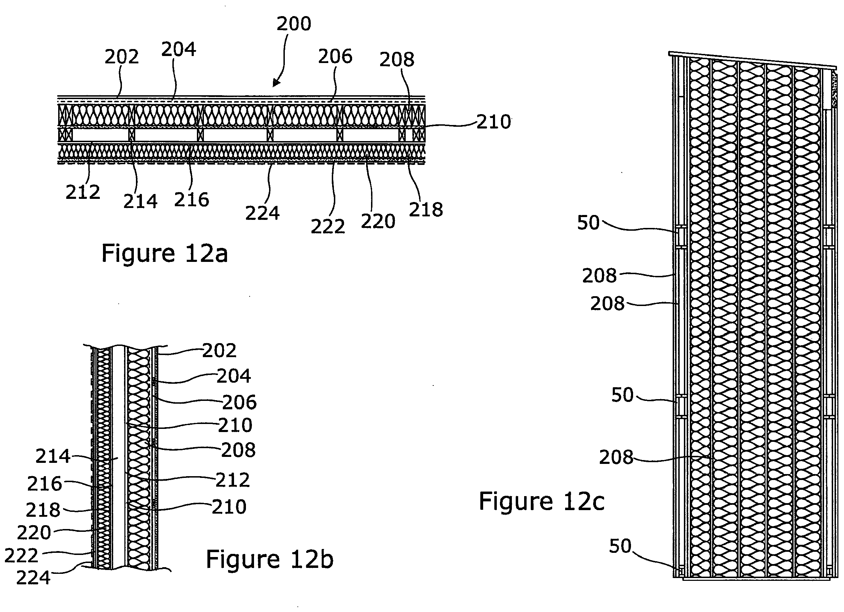

Figures 12a-12c show cross sectional views taken through an external wall panel of the timber frame structure according to an embodiment of the present invention. It will be appreciated that the external wall panel can be constructed on site at the construction site of the timber frame structure. Alternatively, the timber external wall panel can be pre-constructed and delivered as a completed wall cassette or module for assembly with other modules or cassettes from which the timber frame structure is formed.

From the interior side of the wall panel to the exterior side of the wall panel 200, it comprises:
a) fire retardant plaster board 202 (i.e. 12.5mm Fireline Board which is skimmed for internal wall finish);
b) horizontal batten 204 to form interior facing cavity for the provision of services for the structure, such as gas, electrics, wiring, and/or the like (i.e. 25 x 50mm wooden battens);
c) Thermal reflective barrier member 206 (i.e. Tyvek Airguard^{™} Reflective AVCL);
d) Upright frame members 208 with thermal insulation therebetween (i.e. 140mm x 45mm studs with Rockwool Flexi^{®} insulation therebetween);
e) Panel member 210 (i.e. plywood panel);
f) Water resistant breathable barrier membrane 212 (i.e. Tyvek StructureGuard^{™} breathable membrane);
g) Vertical batten 214 to form exterior facing cavity for the provision of air/fluid flow around the structure (i.e. 90mm x 38mm wooden battens);
h) Panel member 216 (i.e. plywood panel);
i) Moisture control breathable membrane 218 (i.e. high density polyethylene or Tyvek Housewrap^{™} membrane);
j) Thermal insulation layer 220 (i.e. Expanded polystyrene insulation or 90mm Stylite^{™} Plus Therm EPS insulation);
k) External wall render 222 (i.e. Alumasc^{™} External Wall Insulation System (2 coat polymer render);
l) Brick slips 224.

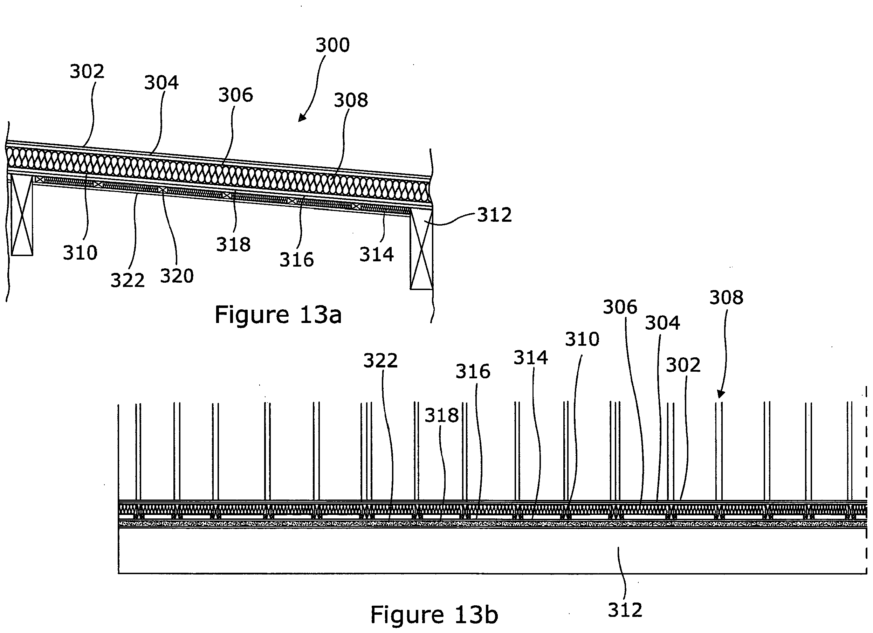

Figures 13a-13b show cross sectional views taken through a roof panel of the timber frame structure according to an embodiment of the present invention. It will be appreciated that the roof panel can be constructed on site at the construction site of the timber frame structure. Alternatively, the roof panel can be pre-constructed and delivered as a completed roof panel cassette or module for assembly with other modules or cassettes from which the timber frame structure is formed.

From the exterior side of the roof panel to the interior side of the roof panel 300, it comprises:
a) Aluminium roof system 302 (i.e. Comak^{™} KLIK aluminium roof system);
b) Thermal reflective barrier member 304 (i.e. Tyvek Airguard^{™} Reflective Barrier);
c) Panel member 306 (i.e. 18mm plywood panel);
d) Rafter members with thermal insulation material between adjacent rafter members 308 (i.e. 142mm rafter with 100mm Rockwool Flexi^{™} Insulation);
e) Batten members 310 (i.e. 25mm x 50mm wood batten members fixed to the side of the rafters);
f) Purlins 312;
g) Water resistant breathable barrier membrane 314 (i.e. Tyvek StructureGuard^{™} breathable membrane);
h) Panel member 316 (i.e. 18mm plywood panel);
i) Thermal reflective barrier member 318 (i.e. Tyvek Airguard^{™} Reflective Barrier);
j) Batten with thermal insulation material between battens 320 (i.e. 63mm x 38mm wooden battens with Rockwool Flexi^{™} Insulation therebetween);
k) Fire retardant board material 322 (i.e. 12.5mm Gyproc^{™} Fireline Board).

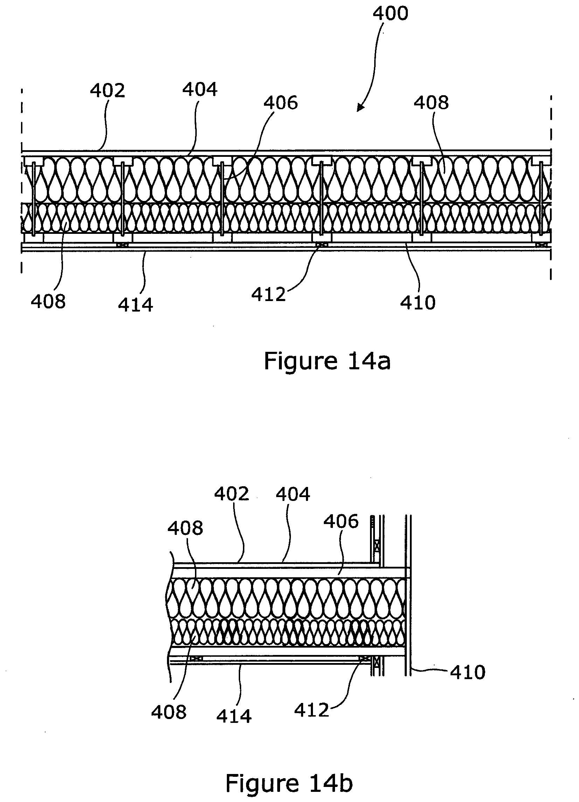

Figures 14a-14b show cross sectional views taken through an upper floor panel of the timber frame structure according to an embodiment of the present invention. It will be appreciated that the upper floor panel can be constructed on site at the construction site of the timber frame structure. Alternatively, the upper floor panel can be pre-constructed and delivered as a completed upper floor panel cassette or module for assembly with other modules or cassettes from which the timber frame structure is formed.

From an upper side of the upper floor panel to the lower side of the upper floor panel 400, it comprises:
a) Panel member 402 (i.e. chipboard panel);
b) Thermal reflective barrier member 404 (i.e. Tyvek Airguard^{™} Reflective Barrier);
c) Joist Member 406;
d) Thermal insulation material 408 (i.e. Rockwool Flexi^{™} Insulation);
e) Thermal reflective barrier member 410 (i.e. Tyvek Airguard^{™} Reflective Barrier);
f) Batten members 412 (i.e. wooden battens 25mm x 50mm);
g) Fire retardant board material 414 (i.e. 12.5mm Gyproc^{™} Fireline Board).

## Claims

1. A timber frame structure for a building, a house or a construction, said structure including:
a) a plurality of integral upright stud members (28, 42) located a spaced distance apart from each other, each integral upright stud member extending between a lowest floor of the structure and roof (30, 44) of the structure, or extending over at least two floor levels in height of the structure;
b) a plurality of integral transverse joist members (50, 52, 54) located at spaced apart locations to form one or more floors of the timber frame structure, each integral transverse joist member extending between at least two opposing integral upright stud members (28, 42) forming part of opposing walls of the timber frame structure;
c) at least a part of each of the integral transverse joist members (50, 52, 54) engaging in a recess (32, 34, 36) defined in each of the opposing integral upright stud members (28, 42);
d) thermal insulating means (80, 100, 102) provided in a continuous or substantially continuous arrangement on and between the integral upright stud members and the integral transverse joist member (28, 42, 50, 52, 54); and
e) the structure arranged such that there are one or more cavities (74) defined in one or more external walls of the structure to allow fluid flow in the cavities (74) in use.

2. A timber frame structure according to claim 1 wherein the timber frame structure is built upon foundation means, and wherein the foundation means includes one or more thermal insulating block means (6) or a hollow concrete block means which is infilled with concrete and/or thermal insulation material.

3. A timber frame structure according to claim 2 wherein base frame means (26, 40) or a sole plate (20) is located on or attached to at least part of the foundation means, to interior wall blocks (10) used on the foundation means and/or thermal insulating means forming at least part of the foundation means, and optionally wherein one or more of the transverse joist members (50, 52, 54) are joined to the base frame means (26, 40) or sole plate (20).

4. A timber frame structure according to claim 1 wherein a waterproof, damp resistant or vapour resistant membrane (16) is located in, on or between one or more layers of the foundation means.

5. A timber frame structure according to claim 1 wherein a thermal insulating, waterproof and/or vapour resistant barrier member (72, 78, 86, 104) is located on top of and/or an external surface of the thermal insulation means provided on and between the transverse joist members (50, 52, 54) and the upright stud members (28, 42).

6. A timber frame structure according to claims 1 or 5 wherein one or more floor panels (106) are located on top of the thermal insulation means (100, 102) and/or barrier member (104) associated with the transverse joist member (50, 52, 54).

7. A timber frame structure according to claim 1 or 5 wherein a first panel member or plurality of first panel members (70) are attached to an exterior or exterior facing surface of the upright stud members (28, 42); and/or a panel member or members, or second set of panel member or members (84), are attached to an interior surface or interior facing surface of the upright stud members (28, 42).

8. A timber frame structure according to claim 7 wherein an airtight and/or vapour resistant barrier member (72) is applied to an exterior or exterior facing surface of the first panel member or members (70), and/or a thermal reflective barrier membrane (86) is applied to an interior facing surface of the interior panel member(s) and/or second set of panel member(s) (84).

9. A timber frame structure according to claim 7 wherein a further panel member or plurality of further panel members (76) are provided on or associated with the exterior or exterior facing surface of the first panel member(s) (70) and is arranged to define the one or more cavities (74) between the first and further panel member(s) (70, 76); and/or a yet further panel member or plurality of yet further panel members (92) are provided on or associated with the interior or interior facing surface of the interior panel member(s) (84) and/or second panel member(s) and is arranged to define the one or more cavities (90) between the second and yet further panel member(s) (92).

10. A timber frame structure according to claim 9 wherein a barrier member (78) is attached to an exterior or exterior facing surface of the further panel member or members (76) that is permeable to water vapour.

11. A timber frame structure according to 1 wherein the one or more cavities (74) are unvented to the exterior of the timber frame structure, and optionally wherein the air or fluid within the one or more cavities (74) is retained therein unless extracted and/or moved via specific ventilation and/or heat recovery means (108) and/or as a result of being allowed to flow into and out of a roof space of the timber frame structure.

12. A timber frame structure according to claim 11 wherein the ventilation and/or heat recovery means (108) includes any or any combination of one or more conduits or conduit means (118, 122), fluid inlet means, fluid outlet means, fluid and/or air circulation devices.

13. A timber frame structure according to claim 1 wherein the one or more cavities (74) defined in the exterior walls of the timber frame structure are in fluid communication with one or more cavities defined within a roof space of the structure.

14. A timber frame structure according to any preceding claim wherein one or more floors, walls and/or roof of the structure are pre-formed as cassettes or modules that are then transported to the construction site for assembly and for joining together with other cassettes or modules to provide the completed frame structure.

15. A method of assembling a timber frame structure for a building, a house or a construction, said method including the steps of
a) locating a plurality of integral upright stud members (28, 42) a spaced distance apart from each other, each integral stud member extending between a lowest floor of the structure and a roof (30, 44) of the structure, or extending over at least two floor levels in height of the structure;
b) locating a plurality of integral transverse joist members (50, 52, 54) at spaced apart locations to form one or more floors of the timber frame structure, each integral transverse joist member extending between at least two of the opposing upright stud members (28, 42) forming part of opposing walls of the structure;
c) engaging at least a part of each of the integral transverse joist members (50, 52, 54) in a recess (32, 34, 36) defined in each of the opposing integral upright stud members (28, 42);
d) providing thermal insulating means (80, 100, 102) in a continuous or substantially continuous arrangement on and between the integral upright stud members and the integral transverse joist member (28, 42, 50, 52, 54); and
e) providing one or more cavities (74) in one or more external walls of the structure to allow fluid flow in the cavities (74) in use.

## Patentansprüche

1. Holzrahmenkonstruktion für ein Gebäude, ein Haus oder ein Bauwerk, wobei die Konstruktion Folgendes beinhaltet:
a) eine Vielzahl integraler aufrechter Ständerelemente (28, 42), die in einer Entfernung voneinander beabstandet angeordnet sind, wobei sich jedes integrale aufrechte Ständerelement zwischen einem untersten Boden der Konstruktion und dem Dach (30, 44) der Konstruktion erstreckt oder sich über mindestens zwei Stockwerke über die Höhe der Konstruktion erstreckt;
b) eine Vielzahl integraler Querbalkenelemente (50, 52, 54), die an voneinander beabstandeten Stellen angeordnet sind, um einen oder mehrere Böden der Holzrahmenkonstruktion zu bilden, wobei sich jedes integrale Querbalkenelement zwischen mindestens zwei gegenüberliegenden integralen aufrechten Ständerelementen (28, 42) erstreckt, die einen Teil gegenüberliegender Wände der Holzrahmenkonstruktion bilden;
c) mindestens ein Teil jedes der integralen Querbalkenelemente (50, 52, 54) in Eingriff mit einer Aussparung (32, 34, 36), die in jedem der gegenüberliegenden integralen aufrechten Ständerelemente (28, 42) definiert ist;
d) Wärmedämmmittel (80, 100, 102), das in einer kontinuierlichen oder im Wesentlichen kontinuierlichen Anordnung auf und zwischen den integralen aufrechten Ständerelementen und dem integralen Querbalkenelement (28, 42, 50, 52, 54) vorgesehen ist; und
e) die Konstruktion, die so angeordnet ist, dass ein oder mehrere Hohlräume (74) in einer oder mehreren Außenwänden der Konstruktion definiert sind, um im Betrieb einen Fluidfluss in den Hohlräumen (74) zu ermöglichen.

2. Holzrahmenkonstruktion nach Anspruch 1, wobei die Holzrahmenkonstruktion auf einem Fundamentmittel aufgebaut ist und wobei das Fundamentmittel ein oder mehrere Wärmedämm-Blockmittel (6) oder hohle Betonblockmittel beinhaltet, die mit Beton und/oder Wärmedämmmaterial gefüllt sind.

3. Holzrahmenkonstruktion nach Anspruch 2, wobei sich ein Grundrahmenmittel (26, 40) oder eine Grundplatte (20) auf zumindest einem Teil des Fundamentmittels befindet oder an diesem und an Innenwandblöcken (10), die auf dem Fundamentmittel verwendet werden, und/oder Wärmedämmmittel, das zumindest einen Teil des Fundamentmittels bildet, angebracht ist und wobei optional eines oder mehrere der Querbalkenelemente (50, 52, 54) mit dem Grundrahmenmittel (26, 40) oder der Grundplatte (20) verbunden sind.

4. Holzrahmenkonstruktion nach Anspruch 1, wobei sich eine wasserdichte, feuchtigkeitsbeständige oder dampfbeständige Membran (16) in, auf oder zwischen einer oder mehreren Schichten des Fundamentmittels befindet.

5. Holzrahmenkonstruktion nach Anspruch 1, wobei sich ein wärmedämmendes, wasserdichtes und/oder dampfbeständiges Barriereelement (72, 78, 86, 104) auf dem Wärmedämmmittel und/oder auf einer Außenfläche dessen befindet, das auf und zwischen den Querbalkenelementen (50, 52, 54) und den aufrechten Ständerelementen (28, 42) vorgesehen ist.

6. Holzrahmenkonstruktion nach Anspruch 1 oder 5, wobei sich eine oder mehrere Bodenplatten (106) auf dem Wärmedämmmittel (100, 102) und/oder dem Barriereelement (104) befinden, das mit dem Querbalkenelement (50, 52, 54) assoziiert ist.

7. Holzrahmenkonstruktion nach Anspruch 1 oder 5, wobei ein erstes Plattenelement oder eine Vielzahl von ersten Plattenelementen (70) auf einer Außenseite oder nach außen weisenden Oberfläche der aufrechten Ständerelemente (28, 42) angebracht sind; und/oder ein oder mehrere Plattenelemente oder ein zweiter Satz von einem oder mehreren Plattenelementen (84) an einer Innenfläche oder einer nach innen weisenden Oberfläche der aufrechten Ständerelemente (28, 42) angebracht sind.

8. Holzrahmenkonstruktion nach Anspruch 7, wobei ein luftdichtes und/oder dampfbeständiges Barriereelement (72) auf einer Außenseite oder nach außen weisenden Oberfläche des einen oder der mehreren ersten Plattenelemente (70) aufgebracht ist und/oder eine wärmereflektierende Barrieremembran (86) auf einer nach innen gerichtete Oberfläche des einen oder der mehreren Innenplattenelemente und/oder des zweiten Satzes von einem oder mehreren Plattenelementen (84) aufgebracht ist.

9. Holzrahmenkonstruktion nach Anspruch 7, wobei ein weiteres Plattenelement oder eine Vielzahl weiterer Plattenelemente (76) auf der Außenseite oder der nach außen weisenden Oberfläche des einen oder der mehreren ersten Plattenelemente (70) vorgesehen oder damit assoziiert ist und angeordnet ist, um den einen oder die mehreren Hohlräume (74) zwischen dem ersten und dem einen oder den mehreren weiteren Plattenelementen (70, 76) zu definieren; und/oder noch ein weiteres Plattenelement oder eine Vielzahl weiterer Plattenelemente (92) auf der Innenseite oder der nach innen weisenden Oberfläche des einen oder der mehreren Innenplattenelemente (84) und/oder des einen oder der mehreren zweiten Plattenelemente vorgesehen oder damit assoziiert ist und so angeordnet ist, dass es oder sie den einen oder die mehreren Hohlräume (90) zwischen dem zweiten und dem einen oder den mehreren noch weiteren Plattenelementen (92) definiert.

10. Holzrahmenkonstruktion nach Anspruch 9, wobei ein Barriereelement (78) an einer Außenseite oder nach außen weisenden Oberfläche des einen oder der mehreren weiteren Plattenelemente (76) angebracht ist, das für Wasserdampf durchlässig ist.

11. Holzrahmenkonstruktion nach Anspruch 1, wobei der eine oder die mehreren Hohlräume (74) zur Außenseite der Holzrahmenkonstruktion hin nicht belüftet sind und wobei optional die Luft oder das Fluid in dem einen oder den mehreren Hohlräumen (74) zurückgehalten wird, es sei denn, sie oder es wird über spezielle Lüftungs- und/oder Wärmerückgewinnungsmittel (108) und/oder infolge des Ermöglichens eines Ein- und Ausströmens in einen und aus einem Dachraum der Holzrahmenkonstruktion abgesaugt und/oder bewegt.

12. Holzrahmenkonstruktion nach Anspruch 11, wobei das Belüftungs- und/oder Wärmerückgewinnungsmittel (108) ein beliebiges oder eine beliebige Kombination von einer oder mehreren Leitungen oder Leitungsmitteln (118, 122), Fluideinlassmitteln, Fluidauslassmitteln, Fluid- und/oder Luftzirkulationsvorrichtungen beinhaltet.

13. Holzrahmenkonstruktion nach Anspruch 1, wobei der eine oder die mehreren Hohlräume (74), die in den Außenwänden der Holzrahmenkonstruktion definiert sind, in Fluidverbindung mit einem oder mehreren Hohlräumen stehen, die in einem Dachraum der Konstruktion definiert sind.

14. Holzrahmenkonstruktion nach einem der vorhergehenden Ansprüche, wobei ein oder mehrere Böden, Wände und/oder Dach der Konstruktion als Kassetten oder Module vorgeformt sind, die dann zur Montage und zum Zusammenfügen mit anderen Kassetten oder Modulen zur Baustelle transportiert werden, um die fertige Rahmenkonstruktion bereitzustellen.

15. Verfahren zum Zusammenbauen einer Holzrahmenkonstruktion für ein Gebäude, ein Haus oder ein Bauwerk, wobei das Verfahren die folgenden Schritte beinhaltet:
a) Anordnen einer Vielzahl integraler aufrechter Ständerelemente (28, 42) in einer Entfernung voneinander beabstandet, wobei sich jedes integrale aufrechte Ständerelement zwischen einem untersten Boden der Konstruktion und dem Dach (30, 44) der Konstruktion erstreckt oder sich über mindestens zwei Stockwerke über die Höhe der Konstruktion erstreckt;
b) Anordnen einer Vielzahl integraler Querbalkenelemente (50, 52, 54) an voneinander beabstandeten Stellen, um einen oder mehrere Böden der Holzrahmenkonstruktion zu bilden, wobei sich jedes integrale Querbalkenelement zwischen mindestens zwei gegenüberliegenden integralen aufrechten Ständerelementen (28, 42) erstreckt, die einen Teil gegenüberliegender Wände der Konstruktion bilden;
c) in Eingriff Bringen mindestens eines Teils jedes der integralen Querbalkenelemente (50, 52, 54) mit einer Aussparung (32, 34, 36), die in jedem der gegenüberliegenden integralen aufrechten Ständerelemente (28, 42) definiert ist;
d) Vorsehen eines Wärmedämmmittels (80, 100, 102) in einer kontinuierlichen oder im Wesentlichen kontinuierlichen Anordnung auf und zwischen den integralen aufrechten Ständerelementen und dem integralen Querbalkenelement (28, 42, 50, 52, 54); und
e) Vorsehen eines oder mehrerer Hohlräume (74) in einer oder mehreren Außenwänden der Konstruktion, um im Betrieb einen Fluidfluss in den Hohlräumen (74) zu ermöglichen.

## Revendications

1. Structure de charpente en bois de construction pour un bâtiment, une maison ou une construction, ladite structure comprenant :
a) une pluralité d'éléments de montant verticaux intégrés (28, 42) situés à une distance espacée les uns des autres, chaque élément de montant vertical intégré s'étendant entre un plancher le plus bas de la structure et le toit (30, 44) de la structure ou s'étendant sur au moins deux niveaux de plancher en hauteur de la structure ;
b) une pluralité d'éléments de solive transversaux intégrés (50, 52, 54) situés à des emplacements espacés pour former un ou plusieurs planchers de la structure de charpente en bois de construction, chaque élément de solive transversal intégré s'étendant entre au moins deux éléments de montant verticaux intégrés opposés (28, 42) faisant partie des parois opposées de la structure de charpente en bois de construction ;
c) au moins une partie de chacun des éléments de solive transversaux intégrés (50, 52, 54) s'engageant dans un évidement (32, 34, 36) défini dans chacun des éléments de montant verticaux intégrés opposés (28, 42) ;
d) des moyens d'isolation thermique (80, 100, 102) disposés selon un agencement continu ou sensiblement continu sur et entre les éléments de montant verticaux intégrés et l'élément de solive transversal intégré (28, 42, 50, 52, 54) ; et
e) la structure est agencée de sorte qu'une ou plusieurs cavités (74) soient définies dans une ou plusieurs parois externes de la structure pour permettre l'écoulement de fluide dans les cavités (74) en cours d'utilisation.

2. Structure de charpente en bois de construction selon la revendication 1, ladite structure de charpente en bois de construction étant construite sur un moyen de fondation, et ledit moyen de fondation comprenant un ou plusieurs moyens de bloc d'isolation thermique (6) ou un moyen de bloc de béton creux qui est rempli de béton et/ ou d'un matériau d'isolation thermique.

3. Structure de charpente en bois de construction selon la revendication 2, un moyen de charpente de base (26, 40) ou une plaque d'appui (20) étant situé sur au moins une partie du moyen de fondation ou fixé à celle-ci, aux blocs de paroi intérieurs (10) utilisés sur le moyen de fondation et/ ou des moyens d'isolation thermique formant au moins une partie du moyen de fondation, et éventuellement lesdits un ou plusieurs des éléments de solive transversaux (50, 52, 54) étant reliés au moyen de charpente de base (26, 40) ou à la plaque d'appui (20).

4. Structure de charpente en bois de construction selon la revendication 1, une membrane (16) imperméable, résistant à l'humidité ou résistant à la vapeur étant située dans, sur ou entre une ou plusieurs couches du moyen de fondation.

5. Structure de charpente en bois de construction selon la revendication 1, un élément barrière (72, 78, 86, 104) d'isolation thermique, imperméable et/ou résistant à la vapeur étant situé au-dessus et/ou sur une surface externe des moyens d'isolation thermique pourvus sur et entre les éléments de solive transversaux (50, 52, 54) et les éléments de montant verticaux (28, 42).

6. Structure de charpente en bois de construction selon les revendications 1 ou 5, un ou plusieurs panneaux de plancher (106) étant situés au-dessus des moyens d'isolation thermique (100, 102) et/ou de l'élément barrière (104) associé à l'élément de solive transversal (50, 52, 54).

7. Structure de charpente en bois de construction selon la revendication 1 ou 5, un premier élément de panneau ou une pluralité de premiers éléments de panneau (70) étant fixés à une surface extérieure ou orientée vers l'extérieur des éléments de montant verticaux (28, 42) ; et/ou un ou plusieurs éléments de panneau, ou une seconde série d'élément ou d'éléments de panneau (84) étant fixés à une surface intérieure ou à une surface orientée vers l'intérieur des éléments de montant verticaux (28, 42).

8. Structure de charpente en bois de construction selon la revendication 7, un élément barrière (72) étanche à l'air et/ou résistant à la vapeur étant appliqué sur une surface extérieure ou orientée vers l'extérieur du ou des premiers éléments de panneau (70), et/ou une membrane barrière thermo-réfléchissante (86) étant appliquée sur une surface orientée vers l'intérieur du ou des éléments de panneau intérieurs et/ou d'une seconde série d'élément ou d'éléments de panneau (84).

9. Structure de charpente en bois de construction selon la revendication 7, un élément de panneau supplémentaire ou une pluralité d'éléments de panneau supplémentaires (76) étant disposés sur ou associés à la surface extérieure ou orientée vers l'extérieur du ou des premiers éléments de panneau (70) et étant agencés pour définir lesdites une ou plusieurs cavités (74) entre le premier et le ou les éléments de panneau supplémentaires (70, 76) ; et/ou encore un élément de panneau supplémentaire ou encore une pluralité d'éléments de panneau supplémentaires (92) étant disposés sur ou associés à la surface intérieure ou orientée vers l'intérieur du ou des éléments de panneau intérieurs (84) et/ou du ou des seconds éléments de panneau et étant agencé pour définir lesdites une ou plusieurs cavités (90) entre le second et encore le ou les éléments de panneau supplémentaires (92).

10. Structure de charpente en bois de construction selon la revendication 9, un élément barrière (78) étant fixé à une surface extérieure ou orientée vers l'extérieur du ou des éléments de panneau supplémentaires (76) qui est perméable à la vapeur d'eau.

11. Structure de charpente en bois de construction selon la revendication 1, lesdites une ou plusieurs cavités (74) n'étant pas ventilées vers l'extérieur de la structure de charpente en bois de construction, et éventuellement, l'air ou le fluide à l'intérieur desdites une ou plusieurs cavités (74) y étant retenu à moins qu'il ne soit extrait et/ou déplacé par le biais d'un moyen de ventilation et/ou de récupération de chaleur spécifique (108) et/ou suite à son écoulement dans et hors d'un espace de toit de la structure de charpente en bois de construction.

12. Structure de charpente en bois de construction selon la revendication 11, ledit moyen de ventilation et/ou de récupération de chaleur (108) comprenant un quelconque ou toute combinaison d'un ou plusieurs conduits ou moyens de conduit (118, 122), un moyen d'entrée de fluide, un moyen de sortie de fluide, des dispositifs de circulation de fluide et/ou d'air.

13. Structure de charpente en bois de construction selon la revendication 1, lesdites une ou plusieurs cavités (74) définies dans les parois extérieures de la structure de charpente en bois de construction étant en communication fluidique avec une ou plusieurs cavités définies dans un espace de toit de la structure.

14. Structure de charpente en bois de construction selon l'une quelconque des revendications précédentes, un ou plusieurs planchers, murs et/ou toit de la structure étant préformés sous forme de cassettes ou de modules qui sont ensuite transportés vers le site de construction pour être assemblés et être joints ensemble avec d'autres cassettes ou modules pour fournir la structure de charpente terminée.

15. Procédé d'assemblage d'une structure de charpente en bois de construction pour un bâtiment, une maison ou une construction, ledit procédé comprenant les étapes de :
a) positionnement d'une pluralité d'éléments de montant verticaux intégrés (28, 42) à une distance espacée les uns des autres, chaque élément de montant intégré s'étendant entre un plancher le plus bas de la structure et un toit (30, 44) de la structure, ou s'étendant sur au moins deux niveaux de plancher en hauteur de la structure ;
b) positionnement d'une pluralité d'éléments de solive transversaux intégrés (50, 52, 54) à des emplacements espacés pour former un ou plusieurs planchers de la structure de charpente en bois de construction, chaque élément de solive transversal intégré s'étendant entre au moins deux des éléments de montant verticaux opposés (28, 42) faisant partie des parois opposées de la structure ;
c) engagement d'au moins une partie de chacun des éléments de solive transversaux intégrés (50, 52, 54) dans un évidement (32, 34, 36) défini dans chacun des éléments de montant verticaux intégrés opposés (28, 42) ;
d) fourniture de moyens d'isolation thermique (80, 100, 102) dans un agencement continu ou sensiblement continu sur et entre les éléments de montant verticaux intégrés et l'élément de solive transversal intégré (28, 42, 50, 52, 54) ; et
e) fourniture d'une ou plusieurs cavités (74) dans une ou plusieurs parois externes de la structure pour permettre l'écoulement de fluide dans les cavités (74) lors de l'utilisation.
